Europäisches Patentamt

European Patent Office

Office européen des brevets

(19)

(11) **EP 0 890 153 B1**

(12) **EUROPÄISCHE PATENTSCHRIFT**

(45) Veröffentlichungstag und Bekanntmachung des Hinweises auf die Patenterteilung:
   **23.05.2001 Patentblatt 2001/21**

(21) Anmeldenummer: 97916339.1

(22) Anmeldetag: **11.03.1997**

(51) Int Cl.⁷: **G06F 15/80**

(86) Internationale Anmeldenummer:
   **PCT/DE97/00473**

(87) Internationale Veröffentlichungsnummer:
   **WO 97/36248 (02.10.1997 Gazette 1997/42)**

(54) **VERFAHREN ZUR ERMITTLUNG VON ZUR ENTFERNUNG GEEIGNETEN GEWICHTEN EINES NEURONALEN NETZES MIT HILFE EINES RECHNERS**

METHOD FOR DETERMINATION OF WEIGHTS, SUITABLE FOR ELIMINATION, OF A NEURAL NETWORK USING A COMPUTER

PROCEDE DE DETERMINATION DE POIDS APTES A ETRE ELIMINES, D'UN RESEAU NEURONAL, AU MOYEN D'UN ORDINATEUR

(84) Benannte Vertragsstaaten:
   **DE FR GB**

(30) Priorität: **25.03.1996 DE 19611732**

(43) Veröffentlichungstag der Anmeldung:
   **13.01.1999 Patentblatt 1999/02**

(73) Patentinhaber: **SIEMENS AKTIENGESELLSCHAFT 80333 München (DE)**

(72) Erfinder:
   • **TRESP, Volker**
    **D-80539 München (DE)**
   • **ZIMMERMANN, Hans-Georg**
    **D-82319 Starnberg (DE)**
   • **NEUNEIER, Ralph**
    **D-80469 München (DE)**

(56) Entgegenhaltungen:
   • **PROCEEDINGS OF THE INTERNATIONAL JOINT CONFERENCE ON NEURAL NETWORK (IJCNN), BALTIMORE, JUNE 7 - 11, 1992, Bd. 3, 7.Juni 1992, INSTITUTE OF ELECTRICAL AND ELECTRONICS ENGINEERS, Seiten 980-987, XP000340469 HERGERT F ET AL: "A COMPARISON OF WEIGHT ELIMINATION METHODS FOR REDUCING COMPLEXITY IN NEURAL NETWORKS"**
   • **PROCEEDINGS OF THE THIRD INTERNATIONAL CONFERENCE ON NEURAL NETWORKS IN THE CAPITAL MARKETS, PROCEEDINGS OF THE 3RD INTERNATIONAL CONFERENCE ON NEURAL NETWORKS IN FINANCIAL ENGINEERING, LONDON, UK, 11-13 OCT., ISBN 981-02-2480-X, 1996, SINGAPORE, WORLD SCIENTIFIC, SINGAPORE, Seiten 511-522, XP000675785 WEIGEND A S ET AL: "Clearning cleaning and learning of data structures"**
   • **PROCEEDINGS OF THE INTERNATIONAL CONFERENCE ON NEURAL NETWORKS (ICN, SAN FRANCISCO, MAR. 28 - APR. 1, 1993, Bd. 1, 28.März 1993, INSTITUTE OF ELECTRICAL AND ELECTRONICS ENGINEERS, Seiten 293-299, XP000366793 BABAK HASSIBI ET AL: "OPTIMAL BRAIN SURGEON AND GENERAL NETWORK PRUNING"**
   • **SYSTEMS & COMPUTERS IN JAPAN, Bd. 23, Nr. 8, 1.Januar 1992, Seiten 46-54, XP000329647 MASAFUMI HAGIWARA: "BACKPROPAGATION WITH SELECTION-REDUCTION OF LEARNING TIME AND ELIMINATION OF HIDDEN UNITS"**
   • **IEEE TRANSACTIONS ON NEURAL NETWORKS, Bd. 6, Nr. 6, 1.November 1995, Seiten 1355-1364, XP000536106 COTTRELL M ET AL: "NEURAL MODELING FOR TIME SERIES: A STATISTICAL STEPWISE METHOD FOR WEIGHT ELIMINATION"**

**Beschreibung**

Durch Entfernung von Gewichten, die nur einen geringen Informationsgehalt bezüglich zu approximierender Trainingsdaten aufweisen, aus einem neuronalen Netz wird die Generalisierungseigenschaft des in seiner Dimensionalität reduzierten neuronalen Netzes erheblich verbessert. Ferner wird auch eine geringere Anzahl von Trainingsdaten benötigt, um das reduzierte neuronale Netz zu trainieren. Auch die Geschwindigkeit des Lernens und der Klassifikation in der Testphase werden gesteigert.

Die Entfernung von Gewichten eines neuronalen Netzes wird als Pruning bezeichnet.

Es sind verschiedene Pruning-Verfahren bekannt. Beispielsweise ist aus dem Dokument [1] ein sogenanntes Optimal Brain Damage (OBD) Verfahren bekannt. Bei diesem Verfahren werden die zweiten Ableitungen der Fehlerfunktion nach den einzelnen Gewichten des neuronalen Netzes verwendet, um die Gewichte, die entfernt werden sollen, auszuwählen. Dieses Verfahren weist den Nachteil auf, daß es nur unter der Voraussetzung funktioniert, daß die Trainingsphase konvergiert hat, d. h. daß die Fehlerfunktion, die während der Trainingsphase minimiert wird, ein lokales Minimum oder globales Minimum der Fehlerfunktion erreicht hat. Hierbei ist der Nachteil dieses bekannten Verfahrens vor allem darin zu sehen, daß man bei diesem Verfahren zumeist nur erheblich übertrainierte neuronale Netze auf zu entfernende Gewichte untersuchen kann.

Dieselbe Voraussetzung der Konvergenz der Trainingsphase, und somit auch dieselben Nachteile, weist das ebenfalls in dem Dokument [1] beschriebene Verfahren auf. Dieses Verfahren ist als Optimal Brain Surgeon (OBS) bekannt.

Ferner ist ein Verfahren bekannt, bei dem die Trainingsphase gestoppt wird, bevor ein Minimum in der Fehlerfunktion erreicht ist. Diese Vorgehensweise wird als Early Stopping bezeichnet und ist beispielsweise in dem Dokument [2] und [5] beschrieben. In [2] wird zwar auch das OBD-Verfahren zur Bewertung von zur Entfernung geeigneter Gewichte vorgeschlagen, jedoch nur für den Fall, daß die Fehlerfunktion sich in einem Minimum befindet ([2], S. 775 vorletzter Absatz).

Pruning-Verfahren, die eine Bewertungsgröße benutzen, mit der beschrieben wird, in welchem Maße sich der Wert der Fehlerfunktion ändert bei Entfernung eines Gewichts ($w_i$) aus dem Neuronalen Netz, sind aus [3] und [4] bekannt.

Der Erfindung liegt das Problem zugrunde, mit Hilfe eines Rechners zur Entfernung geeignete Gewichte eines neuronalen Netzes zu ermitteln.

Das Problem wird durch das Verfahren gemäß Patentanspruch 1 gelöst.

Ausgehend von einer ersten Größe, die entweder nach dem bekannten Verfahren des Optimal Brain Damage (OBD) oder des Optimal Brain Surgeon (OBS) ermittelt wird, wird eine zweite Größe für jedes untersuchte Gewicht ermittelt, mit der beschrieben wird, wie sehr sich bei Änderung dieses Gewichts die Fehlerfunktion ändern würde. Die zweite Größe kann somit als ein Korrekturterm angesehen werden, durch den der Abbruch der Trainingsphase, bevor die Fehlerfunktion sich in einem Minimum befindet, korrigiert wird. Aus der ersten Größe und der zweiten Größe wird nunmehr eine Kriteriumsgröße gebildet, anhand der für das Gewicht jeweils ermittelt wird, ob sich das Gewicht zur Entfernung aus dem neuronalen Netz eignet oder nicht.

Die Bildung der zweiten Größe auf die im vorigen beschriebene Weise verbessert das Kriterium erheblich, anhand dessen die Entscheidung getroffen wird, ob sich ein Gewicht zur Entfernung aus dem neuronalen Netz eignet. Dadurch werden tatsächlich diejenigen Gewichte als zur Entfernung geeignet klassifiziert, die auch bezüglich der Trainingsdaten den geringsten Informationsgehalt aufweisen und somit entfernt werden können, ohne daß erhebliche benötigte Information verloren geht. Damit wird ohne größeren Informationsverlust eine erhebliche Beschleunigung der Trainingsphase, eine erhebliche verbesserte Generalisierungseigenschaft in der Testphase des neuronalen Netzes, sowie eine erheblich schnellere Klassifikation in der Testphase erreicht.

Ein weiterer Vorteil des erfindungsgemäßen Verfahrens ist darin zu sehen, daß es im Zusammenhang mit dem Early Stopping eingesetzt wird. Dies ist für die Verfahren des Optimal Brain Damage (OBD) und des Optimal Brain Surgeon (OBS) nicht möglich. Durch das erfindungsgemäße Verfahren ist es also möglich, zwei vorteilhafte Verfahren zur Reduktion von Freiheitsgraden eines Neuronalen Netzes miteinander zu kombinieren.

Vorteilhafte Weiterbildungen der Erfindung ergeben sich aus den abhängigen Ansprüchen.

Durch die Weiterbildung des Verfahrens gemäß Patentanspruch 9 wird es möglich, einmal entfernte Gewichte wieder einzuführen, falls sich im Rahmen eines weiter fortgesetzten Trainings ergeben sollte, daß der Informationsgehalt des entfernten Gewichtes größer ist als noch nicht entfernte Gewichte. Durch diese Möglichkeit, schon entfernte Gewichte wieder in das neuronale Netz mit aufzunehmen, wird das Verfahren erheblich in seiner Flexibilität gesteigert und somit werden auch Entfernungen, die sich nach einer gewissen Zeit als ungünstig herausstellen, wieder umkehrbar. Diese Eigenschaften führen zu einer erheblich optimaleren Struktur des letztendlich gebildeten neuronalen Netzes, als dies durch bekannte Verfahren möglich war.

Ein Ausführungsbeispiel der Erfindung ist in den Zeichnungen dargestellt und wird im weiteren näher erläutert.

Es zeigen

Fig. 1a und 1b — ein neuronales Netz mit Gewichten und Neuronen vor der Entfernung von Gewichten (Figur 1a) sowie nach der Entfernung einiger Gewichte (Figur 1b) ;

Fig. 2 — ein Blockdiagramm, in dem ein Rechner dargestellt ist, mit dem das Pruning-Verfahren notwendigerweise durchgeführt wird;

Fig. 3 — ein Ablaufdiagramm, in dem die einzelnen Verfahrensschritte des erfindungsgemäßen Verfahrens dargestellt sind.

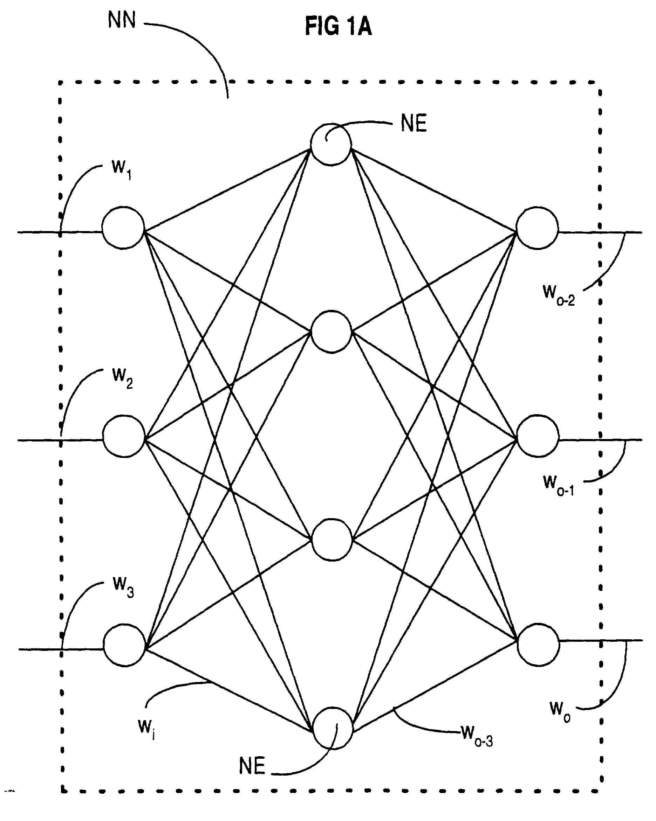

In Fig. 1a ist ein neuronales Netz NN dargestellt, welches in diese Ausführungsbeispiel zehn Neuronen NE, die auf drei Schichten verteilt sind, aufweist. Die einzelnen Neuronen NE sind in diesem Beispiel jeweils mit allen Neuronen NE der direkt folgenden Schicht gekoppelt. Die Kopplungen sind jeweils mit Gewichten $w_i$ gewichtet, d. h. ein Ausgangssignal eines Neurons NE wird jeweils, multipliziert mit dem der Kopplung zugeordneten Gewicht $w_i$, als Eingangssignal dem entsprechenden Neuron NE der direkt darauffolgenden Schicht zugeführt. Hierbei bezeichnet ein Index i jedes Gewicht $w_i$ des neuronalen Netzes NN eindeutig und ist eine natürliche Zahl zwischen 1 und o, wobei o die Anzahl aller Gewichte $w_i$ des neuronalen Netzes NN darstellt.

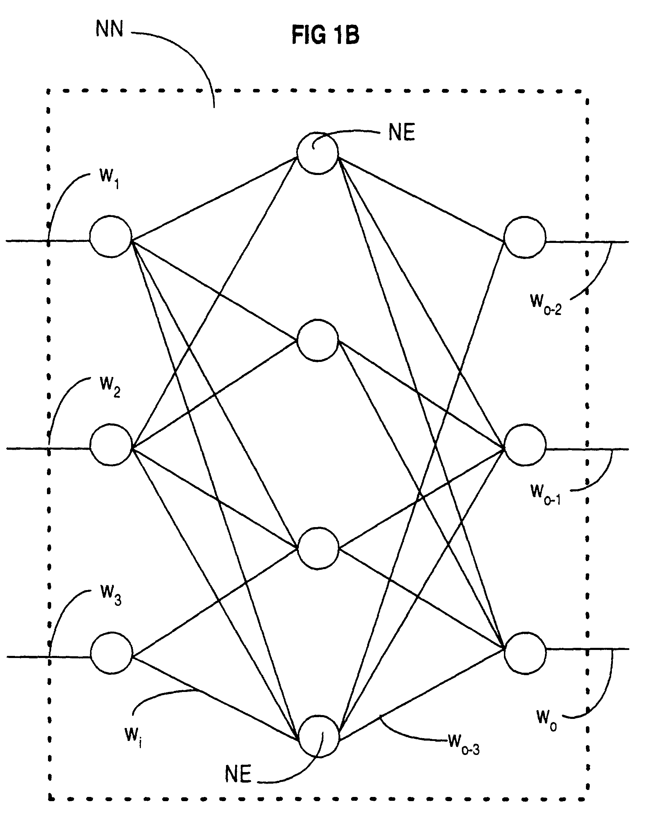

In Figur 1b ist ein reduziertes neuronales Netz NNP dargestellt, nachdem einige Gewichte $w_i$ aus dem neuronalen Netz NN gemäß dem erfindungsgemäßen Verfahren entfernt wurden.

Die Struktur des neuronalen Netzes NN, welche in den Figuren 1a und 1b dargestellt sind, weisen keineswegs einen einschränkenden Charakter auf, sondern sollen nur anhand eines einfachen, übersichtlichen Beispiels die Vorgehensweise bei dem erfindungsgemäßen Verfahren verdeutlichen.

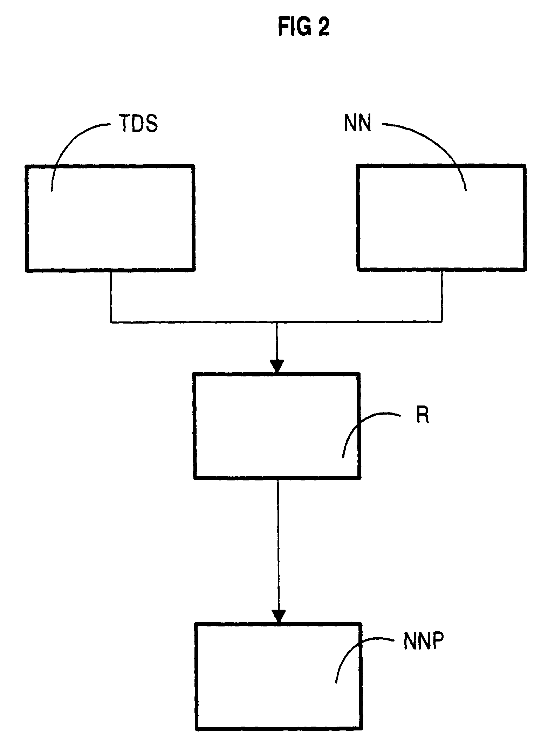

In Fig. 2 ist ein Rechner R dargestellt, mit dem das erfindungsgemäße Verfahren notwendigerweise durchgeführt wird.

Das neuronale Netz NN wird in der Trainingsphase unter Verwendung eines Trainingsdatensatzes TDS trainiert. Der Trainingsdatensatz TDS weist ein Tupel von Trainingsdaten $x_k$ und zugehörigen Sollwerten $y_k$ auf. Ein übliches Ziel einer Trainingsphase für ein neuronales Netz NN besteht darin, eine Fehlerfunktion, die beispielsweise die Differenz der Sollwerte $y_k$ für die angelegten Trainingsdaten $x_k$ beschreibt, zu minimieren. Hierbei sind dem Fachmann unterschiedlichste Verfahren bekannt, beispielsweise das Back-Propagation-Verfahren. Weitere Verfahren können ohne Einschränkungen in diesem erfindungsgemäßen Verfahren eingesetzt werden.

In dem Rechner R wird in der Trainingsphase aus dem Trainingsdatensatz TDS und dem neuronalen Netz NN ein reduziertes neuronales Netz NNP, welches in Fig. 1b dargestellt ist, ermittelt.

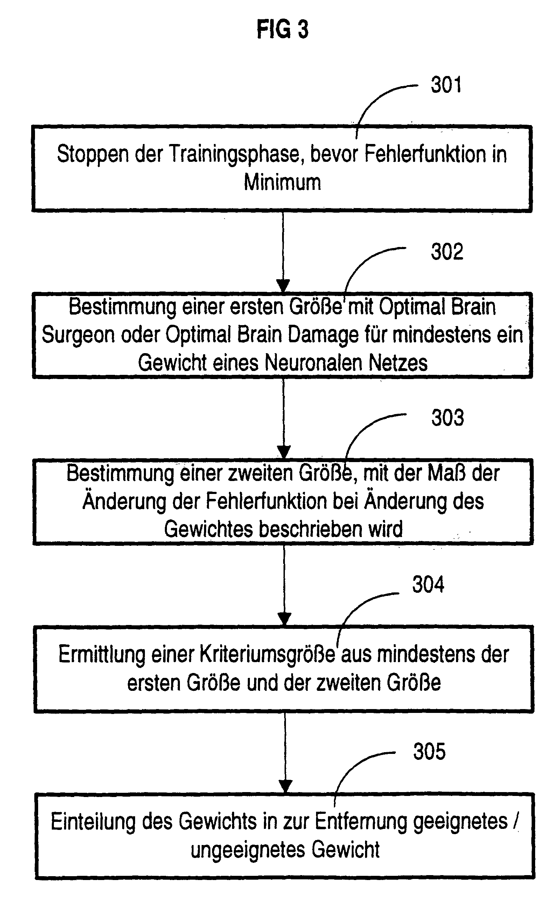

In Figur 3 ist in Form eines Ablaufdiagramms das erfindungsgemäße Verfahren in seinen einzelnen Verfahrensschritten dargestellt. Die Trainingsphase wird gestoppt, bevor die Fehlerfunktion in ein lokales oder globales Minimum konvergiert ist (301).

Unter der Annahme, daß die Fehlerfunktion in ein lokales Minimum konvergiert ist, wird eine erste Größe EG beispielsweise entweder unter Verwendung des Optimal Brain Surgeon (OBS) oder des Optimal Brain Damage (OBD) [1] für jedes zu berücksichtigende Gewicht $w_i$ des neuronalen Netzes NN bestimmt (302).

Es ist vorgesehen, alle Gewichte $w_i$ des neuronalen Netzes NN auf diese Weise zu untersuchen. Es ist jedoch in einer Variante des erfindungsgemäßen Verfahrens ebenso vorgesehen, nur eine beliebige, vorgebbare Anzahl von Gewichten $w_i$ des neuronalen Netzes NN zu berücksichtigen.

Für jedes berücksichtigte Gewicht $w_i$ wird eine zweite Größe ZG bestimmt (303). Mit der zweiten Größe ZG wird die Änderung der Fehlerfunktion bei Änderung des jeweiligen Gewichtes $w_i$ beschrieben.

Die zweite Größe ZG wird beispielsweise auf folgende Weise ermittelt:

$$ZG = \frac{\left( \dfrac{\sum\limits_{k=1}^{K} \partial \left( NN(x_k) - y_k \right)^m}{\partial w_i} \right)^l}{M \cdot A_i} \tag{1}$$

wobei mit

k ein erster Index bezeichnet wird, mit dem jeweils eindeutig ein Trainingsdatum des Neuronalen Netzes bezeichnet wird,

K eine Anzahl berücksichtigter Trainingsdaten bezeichnet wird,

$x_k$ jeweils ein Trainingsdatum bezeichnet wird,

$NN(x_k)$ ein Ausgabewert des Neuronalen Netzes (NN), der sich bei Anlegen des Trainingsdatums $x_k$ ergibt, bezeichnet wird,

$y_k$ ein Sollwert bezeichnet wird, der sich bei Anlegen des Trainingsdatums $x_k$ an das Neuronale Netz (NN) ergeben sollte, $\frac{\partial}{\partial w_i}$ jeweils die partielle Ableitung einer Funktion nach dem jeweils durch einen zweiten Index (i) gekennzeichneten Gewicht beschrieben wird,

M eine vorgebbare natürliche Zahl beschrieben wird,

m eine vorgebbare natürliche Zahl beschrieben wird,

l eine vorgebbare natürliche gerade Zahl beschrieben wird,

und wobei eine Krümmungsgröße ($A_i$) sich ergibt aus

$$A_i = \sum_{k=1}^{K} \frac{\partial^2 \left( NN(x_k) - y_k \right)^m}{\partial w_i^2} \tag{2}$$

oder aus

$$A_i = \sum_{k=1}^{K} \left( \frac{\partial NN(x_k)}{\partial w_i} \right)^m \tag{3}.$$

Ferner ist es auch möglich, die zweite Größe ZG auf folgende Weise zu bestimmen

$$ZG = \frac{\left| \frac{\sum_{k=1}^{K} \partial \left( NN(x_k) - y_k \right)^m}{\partial w_i} \right|^s}{M \cdot A_i} \tag{4},$$

wobei mit

s eine vorgebbare natürliche Zahl beschrieben wird.

Aus mindestens der ersten Größe EG und der zweiten Größe ZG wird eine Kriteriumsgröße KG in einem weiteren Schritt (304) ermittelt.

In einem letzten Schritt 305 wird das jeweils untersuchte Gewicht $w_i$ eingeteilt in entweder ein Gewicht $w_i$, welches sich zur Entfernung aus dem neuronalen Netz NN eignet, da der Informationsgehalt des jeweiligen Gewichts $w_i$ gering ist, oder in ein zur Entfernung aus dem neuronalen Netz NN ungeeignetes Gewicht.

In einer Weiterbildung des erfindungsgemäßen Verfahrens wird bei der Kriteriumsgröße KG eine dritte Größe DG berücksichtigt, die beispielsweise nach folgender Vorschrift gebildet wird:

$$DG = \frac{\sum\limits_{k=1}^{K} \partial\left(NN(x_k) - y_k\right)^m}{\partial w_i} \cdot w_i \qquad (5).$$

Somit ergibt sich die Kriteriumsgröße KG entweder aus:

$$KG = EG + ZG \qquad (6)$$

oder aus

$$KG = EG + ZG + DG \qquad (7).$$

Anschaulich betrachtet bedeutet diese Vorgehensweise, daß ausgehend von dem Punkt, an dem die Trainingsphase gestoppt wurde, der Abstand des Punktes der Fehlerfunktion bei Abbruch der Trainingsphase zu dem lokalen Minimum der Fehlerfunktion abgeschätzt wird. Diejenigen Gewichte werden als geeignet zur Entfernung aus dem neuronalen Netz NN klassifiziert, durch die keine oder nur eine geringe Annäherung der Fehlerfunktion an das lokale Minimum erreicht wird.

Die Einteilung des jeweiligen Gewichts $w_i$ in ein zur Entfernung geeignetes bzw. ungeeignetes Gewicht (305) kann auf unterschiedliche Weise erfolgen.

Eine Möglichkeit zur Einteilung besteht darin, daß für die Kriteriumsgröße KG untersucht wird, ob diese einen Wert aufweist, welche unter einer ersten vorgebbaren Schranke liegt. Ist dies der Fall, so wird das Gewicht $w_i$ als geeignet eingestuft, ansonsten als ungeeignet.

Es ist aber auch in einer Variante des Verfahrens vorgesehen, daß nicht eine absolute Schranke, welche den absoluten Informationsgehalt des Gewichtes $w_i$ bezüglich der Trainingsdaten beschreibt, sondern daß eine bestimmte Anzahl von Gewichten $w_i$ aus dem neuronalen Netz NN entfernt werden soll, wobei natürlich ein möglichst geringer Informationsverlust erreicht werden soll. In diesem Fall wird die erste vorgebbare Schranke dadurch gebildet, daß für alle berücksichtigten Gewichte $w_i$ die Kriteriumsgrößen KG miteinander verglichen werden und die Gewichte $w_i$ entfernt werden, deren Wert der Kriteriumsgrößen KG jeweils am kleinsten sind.

Die zur Entfernung geeigneten Gewichte $w_i$ können nunmehr aus dem neuronalen Netz NN entfernt (Pruning) werden.

Es ist jedoch ebenso möglich in einer Weiterbildung des Verfahrens, daß eine getroffene Entscheidung zur Entfernung von einem Gewicht $w_i$ sich im weiteren Verlauf der Trainingsphase bzw. der Testphase als ungünstig erweist, bzw. daß Gewichte $w_i$ ermittelt werden, die noch geringeren Informationsgehalt aufweisen als schon entfernte Gewichte $w_i$. Für diesen Fall ist es in einer Weiterbildung des Verfahrens vorgesehen, die Entscheidung zur Entfernung von Gewichten $w_i$ umkehrbar zu machen, indem für jedes entfernte Gewicht $w_i$ zumindest die zweite Größe ZG oder auch die Kriteriumsgröße KG gespeichert wird. Sollen Gewichte $w_i$ wieder eingeführt werden, so werden unter den schon entfernten Gewichten $w_i$ diejenigen Gewichte $w_i$ wieder eingeführt, deren zweite Größe ZG oberhalb einer vorgebbaren zweiten Schranke liegt. Diese zweite Schranke kann ebenso wie die im vorigen beschriebene erste Schranke bestimmt werden, beispielsweise durch einen vorgebbaren Prozentsatz wieder einzuführender Gewichte $w_i$. Für diesen Fall werden für alle entfernten Gewichte $w_i$ die zweite Größe ZG miteinander verglichen und jeweils die zweiten Größen ZG mit dem größten Werten werden wieder in die Struktur des neuronalen Netzes NN aufgenommen.

Das erfindungsgemäße Verfahren und alle seine Weiterbildungen können sowohl beim sogenannten Off-Line-Learning wie auch beim sogenannten On-Line-Learning eingesetzt werden.

Im Rahmen dieses Dokumentes wurden folgende Veröffentlichungen zitiert:

[1] A. Zell, Simulation Neuronaler Netze, Addison-Wesley, 1. Auflage, ISBN 3-89319-554-8, S. 319 - 328, 1994

[2] W. Finnoff et al, Improving Model Selection by Nonconvergent Methods, Neural Networks, Vol. 6, S. 771 bis 783, 1993

[3] R. Reed, Pruning Algorithms - A Survey, In: IEEE Transactions on Neural Networks, Vol. 4, No. 5, S. 740 - 747, September 1993

[4] E. D. Kamin, A Simple Procedure for Pruning Back-Propagation Trained Neural Networks, In: IEEE Transactions on Neural Networks, Vol. 1, No. 2, S. 239 - 242, Juni 1990

[5] F. Herget et al., A Comparison of Weight Elimination Methods for reducing Complexity in Neural Networks, Proceedings of the International Joint Conference on Neural Networks (ICNN), Baltimore, June 7-11, 1992, In: IEEE, Vol. 3, S. 980-987, June 7, 1992, XP 000340469

**Patentansprüche**

1. Verfahren zur Ermittlung von zur Entfernung geeigneten Gewichten ($w_i$) eines Neuronalen Netzes (NN), mit Hilfe eines Rechners, welches Neuronale Netz in einer Trainingsphase des Neuronalen Netzes (NN) gestoppt wurde, bevor eine in der Trainingsphase zu minimierende Fehlerfunktion sich in einem Minimum befindet (301),

   - bei welchem Verfahren für mindestens ein Gewicht ($w_i$, i = 1 .. o) des Neuronalen Netzes (NN) eine erste Größe (EG) bestimmt wird, mit der eine Bewertung des mindestens einen Gewichts ($w_i$) bezüglich einer Entfernung des mindestens einen Gewichts ($w_i$) aus dem Neuronalen Netz (NN) beschrieben wird unter der Annahme, daß sich die Fehlerfunktion in dem Minimum befindet (302),

   **dadurch gekennzeichnet, daß**

   - für das Gewicht ($w_i$) eine zweite Größe (ZG) bestimmt wird, mit der beschrieben wird, in welchem Maße sich der Wert der Fehlerfunktion ändert bei Änderung des Gewichts ($w_i$) (303),
   - aus mindestens der ersten Größe (EG) und der zweiten Größe (ZG) eine Kriteriumsgröße (KG) für das Gewicht ($w_i$) ermittelt wird, mit der beschrieben wird, in welchem Maße sich der Wert der Fehlerfunktion ändert bei Entfernung des Gewichts ($w_i$) aus dem Neuronalen Netz (NN) (304),
   - bei dem das Gewicht ($w_i$) als ein zur Entfernung geeignetes Gewicht ($w_i$) eingeteilt wird, falls sich aus der Kriteriumsgröße (KG) für das Gewicht ($w_i$) ergibt, daß eine Entfernung des Gewichts ($w_i$) den Wert der Fehlerfunktion um einen Wert ändert, der unterhalb einer vorgebbaren ersten Schranke liegt (305).

2. Verfahren nach Anspruch 1,
   bei dem die erste Größe (EG) mit dem Verfahren des Optimal Brain Damage bestimmt wird.

3. Verfahren nach Anspruch 1,
   bei dem die erste Größe (EG) mit dem Verfahren des Optimal Brain Surgeon bestimmt wird.

4. Verfahren nach einem der Ansprüche 1 bis 3,
   bei dem die zweite Größe (ZG) sich ergibt aus

$$ZG = \frac{\left( \dfrac{\sum\limits_{k=1}^{K} \partial \left( NN(x_k) - y_k \right)^m}{\partial w_i} \right)^l}{M \cdot A_i}$$

   wobei mit

   k ein erster Index bezeichnet wird, mit dem jeweils eindeutig ein Trainingsdatum des Neuronalen Netzes bezeichnet wird,
   K eine Anzahl berücksichtigter Trainingsdaten bezeichnet wird,
   $x_k$ jeweils ein Trainingsdatum bezeichnet wird,

NN($x_k$) ein Ausgabewert des Neuronalen Netzes (NN), der sich bei Anlegen des Trainingsdatums $x_k$ ergibt, bezeichnet wird,

$y_k$ ein Sollwert bezeichnet wird, der sich bei Anlegen des Trainingsdatums $x_k$ an das Neuronale Netz (NN) ergeben sollte, $\frac{\partial}{\partial w_i}$ jeweils die partielle Ableitung einer Funktion nach dem jeweils durch einen zweiten Index (i) gekennzeichneten Gewicht beschrieben wird,

M eine vorgebbare natürliche Zahl beschrieben wird,

m eine vorgebbare natürliche Zahl beschrieben wird,

l eine vorgebbare natürliche gerade Zahl beschrieben wird,

und wobei sich eine Krümmungsgröße ($A_i$) sich ergibt aus

$$A_i \; = \; \sum_{k=1}^{K} \frac{\partial^2 \left( NN\left(x_k\right) - y_k \right)^m}{\partial w_i^2}$$

oder aus

$$A_i \; = \; \sum_{k=1}^{K} \left( \frac{\partial NN\left(x_k\right)}{\partial w_i} \right)^m .$$

**5.** Verfahren nach einem der Ansprüche 1 bis 3,
bei dem die zweite Größe (ZG) sich ergibt aus

$$ZG \; = \; \frac{\left| \dfrac{\sum\limits_{k=1}^{K} \partial \left( NN\left(x_k\right) - y_k \right)^m}{\partial w_i} \right|^s}{M \cdot A_i}$$

wobei mit

k ein erster Index bezeichnet wird, mit dem jeweils eindeutig ein Trainingsdatum des Neuronalen Netzes bezeichnet wird,

K eine Anzahl berücksichtigter Trainingsdaten bezeichnet wird,

$x_k$ jeweils ein Trainingsdatum bezeichnet wird,

NN($x_k$) ein Ausgabewert des Neuronalen Netzes, der sich bei Anlegen des Trainingsdatums $x_k$ ergibt, bezeichnet wird,

$y_k$ ein Sollwert bezeichnet wird, der sich bei Anlegen des Trainingsdatums $x_k$ an das Neuronale Netz (NN) ergeben sollte, $\frac{\partial}{\partial w_i}$ jeweils die partielle Ableitung einer Funktion nach dem jeweils durch einen zweiten Index (i) gekennzeichneten Gewicht beschrieben wird,

M eine vorgebbare natürliche Zahl beschrieben wird,

m eine vorgebbare natürliche Zahl beschrieben wird,

s eine vorgebbare natürliche Zahl beschrieben wird,

und wobei eine Krümmungsgröße ($A_i$) sich ergibt aus

$$A_i = \sum_{k=1}^{K} \frac{\partial^2 \left( NN(x_k) - y_k \right)^m}{\partial w_i^2}$$

oder aus

$$A_i = \sum_{k=1}^{K} \left( \frac{\partial NN(x_k)}{\partial w_i} \right)^m .$$

6. Verfahren nach einem der Ansprüche 1 bis 5,
bei dem eine dritte Größe (DG) gebildet wird nach der Vorschrift

$$DG = \frac{\sum_{k=1}^{K} \partial \left( NN(x_k) - y_k \right)^m}{\partial w_i} \cdot w_i$$

wobei mit

k ein erster Index bezeichnet wird, mit dem jeweils eindeutig ein Trainingsdatum des Neuronalen Netzes bezeichnet wird,
K eine Anzahl berücksichtigter Trainingsdaten bezeichnet wird,
$x_k$ jeweils ein Trainingsdatum bezeichnet wird,
$NN(x_k)$ ein Ausgabewert des Neuronalen Netzes, der sich bei Anlegen des Trainingsdatums $x_k$ ergibt, bezeichnet wird,
$y_k$ ein Sollwert bezeichnet wird, der sich bei Anlegen des Trainingsdatums $x_k$ an das Neuronale Netz (NN) ergeben sollte, $\frac{\partial}{\partial w_i}$ jeweils die partielle Ableitung einer Funktion nach dem jeweils durch einen zweiten Index (i) gekennzeichneten Gewicht ($w_i$) beschrieben wird,
m eine vorgebbare natürliche Zahl beschrieben wird, und

- bei dem die dritte Größe (DG) in der Kriteriumsgröße (KG) berücksichtigt wird.

7. Verfahren nach einem der Ansprüche 1 bis 6,

- bei dem sich die wählbare erste Schranke ergibt aus einem vorgebbaren Prozentsatz zu entfernender Gewichte, und
- bei dem das Gewicht ($w_i$) als ein zur Entfernung geeignetes Gewicht ($w_i$) eingeteilt wird, falls die Kriteriumsgröße (KG) für das Gewicht ($w_i$) unterhalb der Kriteriumsgrößen (KG) einer Anzahl des vorgebbaren Prozentsatzes anderer Gewichte ($w_i$) liegt.

8. Verfahren nach einem der Ansprüche 1 bis 7,
bei dem das zur Entfernung geeignete Gewicht ($w_i$) aus dem Neuronalen Netz (NN) entfernt wird.

9. Verfahren nach Anspruch 8,

- bei dem mindestens die zweite Größe (ZG) des entfernten Gewichts ($w_i$) gespeichert wird,

- bei dem eine vorgebbare Anzahl wieder einzuführender, schon entfernter Gewichte wieder eingeführt wird, wobei die wiedereinzuführenden Gewichte sich ergeben aus den Gewichten, deren Werte der gespeicherten zweite Größe (ZG) größer sind als eine vorgebbare zweite Schranke.

**10.** Verfahren nach Anspruch 9,

- bei dem sich die wählbare zweite Schranke ergibt aus einem vorgebbaren Prozentsatz wiedereinzuführender Gewichte, und
- bei dem das Gewicht ($w_i$) wiedereingeführt wird, falls die mindestens zweite Größe (ZG) für das Gewicht ($w_i$) oberhalb der Werte der mindestens zweiten Größen (ZG) einer Anzahl des vorgebbaren Prozentsatzes anderer Gewichte ($w_i$) liegt.

**11.** Verfahren nach einem der Ansprüche 1 bis 10,
bei dem sich die Kriteriumsgröße (KG) ergibt aus der Summe der ersten Größe (EG) und der zweiten Größe (ZG).

**12.** Verfahren nach Anspruch 6,
bei dem sich die Kriteriumsgröße (KG) ergibt aus der Differenz der Summe der ersten Größe (EG) und der zweiten Größe (ZG) mit der dritten Größe (DG).

**Claims**

**1.** Method for determining weights ($w_i$) that are suitable for removal in a neural network (NN), with the aid of a computer, which neural network has been stopped in a training phase of the neural network (NN) before an error function, which is to be minimized in the training phase, reaches a minimum (301),

- in which method a first variable (EG) is defined for at least one weight ($w_i$, i = 1..o) of the neural network (NN), which first variable (EG) is used to describe an assessment of the at least one weight ($w_i$) in terms of removal of the at least one weight ($w_i$) from the neural network (NN), on the assumption that the error function is at the minimum (302),

characterized in that

- a second variable (ZG) is defined for the weight ($w_i$), which second variable (ZG) is used to describe the extent to which the value of the error function varies when the weight ($w_i$) varies (303),
- a criterion variable (KG) for the weight ($w_i$) is determined from at least the first variable (EG) and the second variable (ZG), which criterion variable (KG) is used to describe the extent to which the value of the error function varies if the weight ($w_i$) is removed from the neural network (NN) (304),
- in which the weight (wi) is classified, as a weight ($w_i$) that is suitable for removal, if the criterion variable (KG) results in the weight ($w_i$) being such that the removal of the weight ($w_i$) varies the value of the error function by a value which is less than a first limit that can be predetermined (305).

**2.** Method according to Claim 1,
in which the first variable (EG) is defined using the optimal brain damage method.

**3.** Method according to Claim 1,
in which the first variable (EG) is defined using the optimal brain surgeon method.

**4.** Method according to one of Claims 1 to 3,
in which the second variable (ZG) is obtained from

$$ZG = \frac{\left( \dfrac{\sum\limits_{k=1}^{K} \partial (NN(x_k) - y_k)^m}{\partial w_i} \right)^l}{M \cdot A_i}$$

where

k denotes a first index which is in each case used to denote a training data item in the neural network unambiguously,

K denotes a number of training data items which are taken into account,

$x_k$ in each case denotes a training data item,

$NN(x_k)$ denotes an output value of the neural network (NN) which results when the training data item $x_k$ is applied,

$y_k$ denotes a desired value which is intended to result when the training data item $x_k$ is applied to the neural network (NN),

$\frac{\partial}{\partial w_i}$ in each case describes the partial derivative of a function on the basis of the weight which is in each case designated by a second index (i)

M describes a natural number which can be predetermined,

m describes a natural number which can be predetermined,

l describes a natural even number which can be predetermined,

and where a curvature variable ($A_i$) is obtained from

$$A_i = \sum_{k=1}^{K} \frac{\partial^2 (NN(x_k) - y_k)^m}{\partial w_i^2}$$

or from

$$A_i = \sum_{k=1}^{K} \left( \frac{\partial NN(x_k)}{\partial w_i} \right)^m.$$

**5.** Method according to one of Claims 1 to 3, in which the second variable (ZG) is obtained from

$$ZG = \frac{\left| \dfrac{\sum\limits_{k=1}^{K} \partial (NN(x_k) - y_k)^m}{\partial w_i} \right|^s}{M \cdot A_i}$$

where

k denotes a first index which is in each case used to denote a training data item in the neural network unambiguously,

K denotes a number of training data items which are taken into account,

$x_k$ in each case denotes a training data item,

$NN(x_k)$ denotes an output value of the neural network which results when the training data item $x_k$ is applied,

$y_k$ denotes a desired value which is intended to result when the training data item $x_k$ is applied to the neural network (NN),

$\frac{\partial}{\partial w_i}$ in each case describes the partial derivative of a function on the basis of the weight which is in each case designated by a second index (i),

M describes a natural number which can be predetermined,

m describes a natural number which can be predetermined,

s describes a natural number which can be predetermined,

and where a curvature variable ($A_i$) is obtained from

$$A_i = \sum_{k=1}^{K} \frac{\partial^2 (NN(x_k) - y_k)^m}{\partial w_i^2}$$

or from

$$A_i = \sum_{k=1}^{K} \left( \frac{\partial NN(x_k)}{\partial w_i} \right)^m .$$

6. Method according to one of Claims 1 to 5,
in which a third variable (DG) is formed from the expression

$$DG = \frac{\sum_{k=1}^{K} \partial (NN(x_k) - y_k)^m}{\partial w_i} \cdot w_i$$

where

k denotes a first index which is in each case used to denote a training data item in the neural network unambiguously,

K denotes a number of training data items which are taken into account,

$x_k$ in each case denotes a training data item,

$NN(x_k)$ denotes an output value of the neural network which results when the training data item $x_k$ is applied,

$y_k$ denotes a desired value which is intended to result when the training data item $x_k$ is applied to the neural network (NN),

$\frac{\partial}{\partial w_i}$ in each case describes the partial derivative of a function on the basis of the weight ($w_i$) which is in each case designated by a second index (i),

m describes a natural number which can be predetermined, and

- in which the third variable (DG) is taken into account in the criterion variable (KG).

7. Method according to one of Claims 1 to 6,

- in which the selectable first limit results from a percentage, which can be predetermined, of weights to be removed, and
- in which the weight ($w_i$) is classified as a weight ($w_i$) that is suitable for removal, if the criterion variable (KG)

for the weight ($w_i$) is less than the criterion variables (KG) of a number of the percentage, which can be pre-determined, of other weights ($w_i$).

8. Method according to one of Claims 1 to 7,

- in which the weight ($w_i$) that is suitable for removal is removed from the neural network (NN).

9. Method according to Claim 8,

- in which at least the second variable (ZG) of the removed weight ($w_i$) is stored,
- in which a number, which can be predetermined, of weights which have already been removed but can be reintroduced are reintroduced, the weights to be reintroduced resulting from the weights which have stored second variable (ZG) values that are greater than a second limit which can be predetermined.

10. Method according to Claim 9,

- in which the selectable second limit results from a percentage, which can be predetermined, of weights which can be reintroduced, and
- in which the weight ($w_i$) is reintroduced if the at least second variable (ZG) for the weight ($w_i$) is above the values of the at least second variables (ZG) of a number of the percentage, which can be predetermined, of other weights ($w_i$).

11. Method according to one of Claims 1 to 10, in which the criterion variable (KG) results from the sum of the first variable (EG) and the second variable (ZG).

12. Method according to Claim 6, in which the criterion variable (KG) results from the difference between the third variable (DG) and the sum of the first variable (EG) and the second variable (ZG).

**Revendications**

1. Procédé de détermination de poids ($w_i$) aptes à être éliminés d'un réseau (NN) neuronal, à l'aide d'un ordinateur,

- dans lequel on a arrêté la phase d'apprentissage du réseau (NN) neuronal avant qu'une fonction d'erreur à minimiser dans la phase d'apprentissage se trouve à un minimum (301),
- dans lequel pour au moins un poids ($w_i$, i = 1 ... 0) du réseau (NN) neuronal, on détermine une première grandeur (EG) par laquelle on décrit une évaluation du au moins un poids ($w_i$) pour ce qui concerne une élimination du au moins un poids ($w_i$) du réseau (NN) neuronal en faisant l'hypothèse que la fonction d'erreur se trouve au minimum (302),
- dans lequel pour le poids ($w_i$) on détermine une deuxième grandeur (ZG) par laquelle on décrit dans quelle mesure la valeur de la fonction d'erreur se modifie lors de la variation du poids ($w_i$) (303),
- dans lequel à partir d'au moins la première grandeur (EG) et la deuxième grandeur (ZG) on détermine une grandeur (KG) de critère pour le poids ($w_i$) par laquelle on décrit dans quelle mesure la valeur de la fonction d'erreur se modifie lors de l'élimination du poids ($w_i$) du réseau (NN) neuronal (304),
- dans lequel le poids ($w_i$) est classé en tant que poids ($w_i$) apte à être éliminé dans le cas où l'on obtient par la grandeur (KG) de critère pour le poids ($w_i$) qu'une élimination du poids ($w_i$) modifie la valeur de la fonction d'erreur d'une valeur qui est inférieure à une première borne pouvant être prescrite.

2. Procédé suivant la revendication 1, dans lequel on détermine la première grandeur (EG) par le procédé du Optimal Brain Damage.

3. Procédé suivant la revendication 1, dans lequel on détermine la première grandeur (EG) par le procédé du Optimal Brain Surgeon.

4. Procédé suivant l'une des revendications 1 à 3, dans lequel la deuxième grandeur (ZG) est donnée par :

$$ZG = \frac{\left(\dfrac{\sum\limits_{k=1}^{K} \partial(NN(x_k) - y_k)^m}{\partial w_i}\right)^1}{M \cdot A_i}$$

dans laquelle

on désigne par k un premier indice par lequel une donnée d'apprentissage du réseau neuronal est désignée de manière univoque,
on désigne par K un nombre de données d'apprentissage à prendre en compte,
on désigne par $x_k$ respectivement une donnée d'apprentissage,
on désigne par NN ($x_k$) une valeur de sortie du réseau neuronal qui est obtenue par l'application de la donnée $x_k$ d'apprentissage,
on désigne par $y_k$ une valeur de consigne qui doit être obtenue par l'application de la donnée $x_k$ d'apprentissage au réseau (NN) neuronal,
on décrit par $\frac{\partial}{\partial w_i}$ respectivement la dérivé partielle d'une fonction par rapport au poids caractérisé par un deuxième indice (i),
on décrit par M un nombre naturel qui peut être prescrit,
on décrit par m un nombre naturel qui peut être prescrit,
on décrit par I un nombre naturel qui peut être prescrit,
et une grandeur ($A_i$) de courbure est donnée par

$$A_i = \sum_{k=1}^{K} \frac{\partial^2 (NN(x_k) - y_k)^m}{\partial w_i^2}$$

ou par

$$A_i = \sum_{k=1}^{K} \left(\frac{\partial NN(x_k)}{\partial w_i}\right)^m$$

5. Procédé suivant l'une des revendications 1 à 3,
dans lequel on forme une deuxième grandeur (ZG) conformément à

$$ZG = \frac{\left|\dfrac{\sum\limits_{k=1}^{K} \partial(NN(x_k) - y_k)^m}{\partial w_i}\right|^s}{M \cdot A_i}$$

dans laquelle

on désigne par k un premier indice par lequel on désigne respectivement de manière univoque une donnée d'apprentissage du réseau neuronal,

on désigne par K un nombre de données d'apprentissage à prendre en considération,

on désigne par $x_k$ respectivement une donnée d'apprentissage,

on désigne par NN $(x_k)$ une valeur de sortie du réseau neuronal qui est obtenue par l'application de la donnée $x_k$ d'apprentissage,

on désigne par $Y_k$ une valeur de consigne qui doit être obtenue par application de la donnée $x_k$ d'apprentissage au réseau (NN) neuronal,

on décrit par $\frac{\partial}{\partial w_i}$ respectivement la dérivée partielle d'une fonction par rapport au poids ($w_i$) caractérisé respectivement par un deuxième indice (i),

on décrit par M un nombre naturel pouvant être prescrit,

on décrit par m un nombre naturel pouvant être prescrit,

on décrit par s un nombre naturel pouvant être prescrit,

et une grandeur ($A_i$) de courbure est donnée par

$$A_i = \sum_{k=1}^{K} \frac{\partial^2 (NN(x_k) - y_k)^m}{\partial w_i^2}$$

ou par

$$A_i = \sum_{k=1}^{K} \left( \frac{\partial NN(x_k)}{\partial w_i} \right)^m .$$

6. Procédé suivant l'une des revendications 1 à 5, dans lequel on forme une troisième grandeur (DG) conformément à

$$DG = \frac{\sum_{k=1}^{K} \partial (NN(x_k) - y_k)^m}{\partial w_i} \cdot w_i$$

dans laquelle

on désigne par k un premier indice par lequel on désigne respectivement de manière univoque une donnée d'apprentissage du réseau neuronal,

on désigne par K un nombre de données d'apprentissage à prendre en considération,

on désigne par $x_k$ respectivement une donnée d'apprentissage,

on désigne par NN $(x_k)$ une valeur de sortie du réseau neuronal qui est obtenue par l'application de la donnée $x_k$ d'apprentissage,

on désigne par $y_k$ une valeur de consigne qui doit être obtenue par application de la donnée $x_k$ d'apprentissage au réseau (NN) neuronal,

on décrit par $\frac{\partial}{\partial w_i}$ respectivement la dérivée partielle d'une fonction par rapport au poids ($w_i$) caractérisé respectivement par un deuxième indice (i),

on décrit par m un nombre naturel pouvant être prescrit, et

- dans lequel on tient compte de la troisième grandeur (DG) dans la grandeur (KG) de critère.

7. Procédé suivant l'une des revendications 1 à 6,

dans lequel on obtient la première borne qui peut être choisie à partir d'un pourcentage pouvant être prescrit de poids à éliminer, et

dans lequel le poids ($w_i$) est classé comme poids ($w_i$) apte à être éliminé dans le cas où la grandeur (KG) de critère pour le poids ($w_i$) est inférieur à la grandeur (KG) de critère d'un nombre du pourcentage pouvant être prescrit d'autres poids ($w_i$).

8. Procédé suivant l'une des revendications 1 à 7,
dans lequel le poids ($w_i$) apte à être éliminé est éliminé du réseau (NN) neuronal.

9. Procédé suivant la revendication 8,

- dans lequel au moins la deuxième grandeur (ZG) du poids ($w_i$) à éliminer est mémorisée,
- dans lequel un nombre pouvant être prescrit de poids déjà éliminés est à réintroduire et réintroduits, les poids réintroduits étant obtenus à partir des poids dont les valeurs de la deuxième grandeur (ZG) mémorisée sont plus grandes qu'une deuxième borne pouvant être prescrite.

10. Procédé suivant la revendication 9,

dans lequel la deuxième borne pouvant être prescrite est obtenue à partir d'un pourcentage pouvant être prescrit de poids à réintroduire, et

dans lequel le poids ($w_i$) est réintroduit dans le cas où la au moins deuxième grandeur (ZG) pour le poids ($w_i$) est supérieur à la valeur de la au moins deuxième grandeur (ZG) d'un nombre de pourcentages pouvant être prescrits d'autres poids ($w_i$).

11. Procédé suivant l'une des revendications 1 à 10,
dans lequel la grandeur (KG) de critère provient de la somme de la première grandeur (EG) et de la deuxième grandeur (ZG).

12. Procédé suivant la revendication 6,
dans lequel la grandeur (KG) de critère est obtenue en faisant la différence ente la somme de la première grandeur (EG) et de la seconde grandeur (ZG) d'une part, et la troisième grandeur (DG) d'autre part.

FIG 1A

**FIG 1B**

# FIG 2

## FIG 3

301

Stoppen der Trainingsphase, bevor Fehlerfunktion in Minimum

302

Bestimmung einer ersten Größe mit Optimal Brain Surgeon oder Optimal Brain Damage für mindestens ein Gewicht eines Neuronalen Netzes

303

Bestimmung einer zweiten Größe, mit der Maß der Änderung der Fehlerfunktion bei Änderung des Gewichtes beschrieben wird

304

Ermittlung einer Kriteriumsgröße aus mindestens der ersten Größe und der zweiten Größe

305

Einteilung des Gewichts in zur Entfernung geeignetes / ungeeignetes Gewicht